(19) Europäisches Patentamt
European Patent Office
Office européen des brevets

(11) EP 4 691 625 A1

(12) **EUROPEAN PATENT APPLICATION**
published in accordance with Art. 153(4) EPC

(43) Date of publication:
**11.02.2026 Bulletin 2026/07**

(21) Application number: **24778843.3**

(22) Date of filing: **19.02.2024**

(51) International Patent Classification (IPC):
***B01J 20/22*** *(2006.01)* ***B01D 53/04*** *(2006.01)*
***C01B 3/38*** *(2026.01)* ***H01M 8/04*** *(2016.01)*
***H01M 8/0612*** *(2016.01)*

(52) Cooperative Patent Classification (CPC):
**B01D 53/04; B01J 20/22; C01B 3/38; H01M 8/04; H01M 8/0612**

(86) International application number:
**PCT/JP2024/005808**

(87) International publication number:
**WO 2024/202698 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023056596**

(71) Applicant: **Panasonic Intellectual Property Management Co., Ltd.**
**Kadoma-shi, Osaka 571-0057 (JP)**

(72) Inventors:
- **OTA, Tomohiro**
  **Kadoma-shi, Osaka 571-0057 (JP)**
- **TAGUCHI, Kiyoshi**
  **Kadoma-shi, Osaka 571-0057 (JP)**
- **TAKEDA, Kenyu**
  **Kadoma-shi, Osaka 571-0057 (JP)**

(74) Representative: **Grünecker Patent- und Rechtsanwälte PartG mbB**
**Leopoldstraße 4**
**80802 München (DE)**

(54) **DESULFURIZING AGENT, METHOD FOR REMOVING SULFUR COMPOUND FROM FLUID USING SAID DESULFURIZING AGENT, AND METHOD FOR PRODUCING HYDROGEN-CONTAINING GAS**

(57) A desulfurizing agent of the present disclosure is a desulfurizing agent for removing a sulfur compound from a fluid including moisture and the sulfur compound, the desulfurizing agent including: at least one kind of metal ions selected from the group consisting of an aluminum ion, an iron ion, and a copper ion; and an organic ligand coordinating to the metal ion, wherein the organic ligand includes isophthalic acid having optionally a substituent at a 5-position of a benzene ring, and in an X-ray diffraction pattern of the desulfurizing agent measured using Cu-Kα radiation, a diffraction peak is present in each of a diffraction angle range of 10.9° ± 0.3° and a diffraction angle range of 18.1° ± 0.3°.

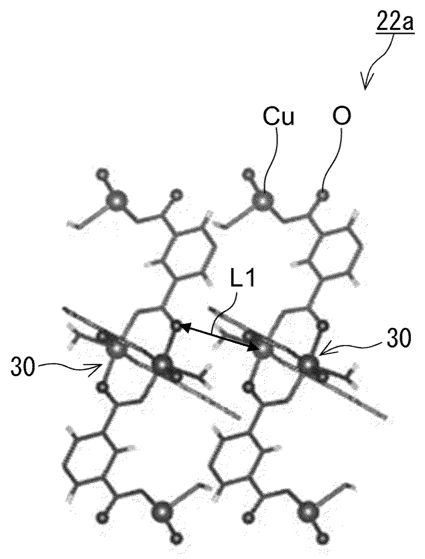


FIG.3A

EP 4 691 625 A1

## Description

### TECHNICAL FIELD

The present invention relates to a technique for removing a sulfur compound from a fluid.

### BACKGROUND ART

A fuel cell cogeneration system (hereinafter, simply referred to as a "fuel cell system") having high power generation efficiency and overall efficiency has been receiving attention as a distributed power generator that makes it possible to use energy effectively. Many fuel cells use a hydrogen gas as a fuel in power generation.

A hydrogen gas is generated from a hydrocarbon fuel such as natural gas and liquefied petroleum gas (LPG) by a steam reforming process. Commercially-available hydrocarbon fuels contain a sulfur compound such as tertiary butyl mercaptan (TBM), dimethyl sulfide (DMS), or tetrahydrothiophene (THT) as an odorant in addition to a naturally occurring sulfur compound. Steam reforming catalysts are easily poisoned by sulfur compounds in general. For this reason, a desulfurizer is provided preceding a steam reformer.

Similarly in a case of supplying a pure hydrogen gas to a fuel cell via a gas cylinder, a pipeline or the like, a sulfur compound as an odorant is sometimes mixed with the pure hydrogen gas to enhance safety against gas leaks. The sulfur compound is required to be removed since it poisons the fuel cell catalyst.

### CITATION LIST

#### Patent Literature

Patent Literature 1: JP 6238150 B

### SUMMARY OF INVENTION

#### Technical Problem

Patent Literature 1 discloses a desulfurizing agent using a metal-organic framework. However, the metal-organic framework described in Patent Literature 1 has the drawback of being susceptible to moisture.

#### Solution to Problem

The present disclosure aims to provide a technique for removing a sulfur compound from a gas including moisture and the sulfur compound.

#### Advantageous Effects of Invention

The present disclosure provides a desulfurizing agent for removing a sulfur compound from a fluid including moisture and the sulfur compound, the desulfurizing agent including:

at least one kind of metal ions selected from the group consisting of an aluminum ion, an iron ion, and a copper ion; and an organic ligand coordinating to the metal ion, wherein
the organic ligand includes isophthalic acid having optionally a substituent at a 5-position of a benzene ring, and
in an X-ray diffraction pattern of the desulfurizing agent measured using Cu-K$\alpha$ radiation, a diffraction peak is present in each of a diffraction angle range of 10.9° $\pm$ 0.3° and a diffraction angle range of 18.1° $\pm$ 0.3°.

In another aspect, the present disclosure provides a method for removing a sulfur compound from a fluid including moisture and the sulfur compound,
the method including bringing the fluid into contact with the desulfurizing agent according to the aforementioned disclosure.

In another aspect, the present disclosure provides a method for producing a hydrogen-containing gas, the method including:

bringing a fuel gas into contact with the desulfurizing agent according to the aforementioned disclosure to remove a sulfur compound from the fuel gas, where the fuel gas includes moisture, the sulfur compound, and a hydrocarbon;

and
generating a hydrogen-containing gas from the fuel gas.

Advantageous Effects of Invention

According to the technique of the present disclosure, a sulfur compound can be removed from a gas including moisture and the sulfur compound.

BRIEF DESCRIPTION OF DRAWINGS

FIG. 1 is a configuration diagram of a fuel cell system according to the present embodiment.
FIG. 2 is a configuration diagram of a desulfurizer used in the fuel cell system of FIG. 1.
FIG. 3A is a diagram showing a structure of a metal-organic framework as a desulfurizing agent.
FIG. 3B is a diagram showing a structure of HKUST-1 described in Patent Literature 1.
FIG. 4 is a diagram of a fuel cell system according to another embodiment.
FIG. 5 is a diagram of a fuel cell system according to yet another embodiment.
FIG. 6 is a diagram of a fuel cell system according to yet another embodiment.
FIG. 7 shows X-ray diffraction spectra of desulfurizing agents (metal-organic frameworks) according to Example 1 and Comparative Example 1.

DESCRIPTION OF EMBODIMENTS

(Findings on which the present disclosure is based)

By the time the present inventors conceived the present disclosure, Ag zeolite had been known as a desulfurizing agent for removing a sulfur compound from a fluid containing the sulfur compound. Ag zeolite is obtainable by introducing Ag into an ion exchange site of zeolite. With the Ag zeolite, even a sulfur compound that is difficult to adsorb can be effectively removed. However, since Ag is expensive, Ag zeolite poses a cost issue.
As another desulfurizing agent, a metal-organic framework (HKUST-1) including a copper ion and benzene-1,3,5-tricarboxylic acid has been known (Patent Literature 1). HKUST-1 has characteristics such as a high copper ion content and a high specific surface area. With HKUST-1, a sulfur compound can be effectively removed from a fluid. Furthermore, HKUST-1 is a low-cost material compared to Ag zeolite.
However, as a result of investigations by the present inventors, it has been found that HKUST-1 has problems with regard to moisture resistance and water resistance. That is, HKUST-1 is prone to degradation in its crystal structure due to dampness, steam, or water. Therefore, when HKUST-1 is exposed to a fluid containing moisture for an extended period of time, its gas adsorption performance significantly decreases.
Under such circumstances, the present inventors conceived adopting sacrificial bonds as a means for improving the moisture resistance and water resistance of the metal-organic framework, leading to the subject matter of the present disclosure. "Sacrificial bond" refers to a breakable bond that is introduced into the structure. The energy that may result in structural collapse is allowed to be consumed for breaking the sacrificial bond, the overall durability of the metal-organic framework is improved.
The present embodiments will now be described in detail with reference to the drawings, though unnecessarily detailed descriptions may be omitted. For example, detailed descriptions of matters already well known or redundant descriptions of substantially identical configurations may be omitted.
The attached drawings and the following description are provided to enable those skilled in the art to fully understand the present disclosure, and are not intended to limit the subject matter of the claims.

(Embodiment 1)

The following describes Embodiment 1 with reference to FIG. 1 to FIG. 3.

[1-1. Configuration]

FIG. 1 is a configuration diagram of a fuel cell system according to the present embodiment. A fuel cell system 100 includes a fuel cell 12 and a hydrogen generation apparatus 13. The hydrogen generation apparatus 13 includes a supply source 14, a desulfurizer 16, and a reformer 18. The supply source 14 serves to provide a fuel including a sulfur compound

as an odorant. Specific examples of the supply source 14 are a fuel storage tank and city gas infrastructure. The desulfurizer 16 is a device for removing the sulfur compound included in the fuel from the fuel. The desulfurizer 16 is connected to the supply source 14 by a passage such as a pipe. The fuel is supplied to the desulfurizer 16 from the supply source 14. The reformer 18 is a device for generating hydrogen by a known steam reforming reaction ($CH_4 + H_2O \rightarrow CO + 3H_2$). The reformer 18 contains a steam reforming catalyst for inducing the steam reforming reaction. The reformer 18 is connected to the desulfurizer 16 by a passage such as a pipe so that the fuel treated by the desulfurizer 16 is supplied to the reformer 18. The fuel cell 12 is connected to the hydrogen generation apparatus 13 by a passage such as a pipe so that the hydrogen generated by the hydrogen generation apparatus 13 is supplied to the fuel cell 12. Between the fuel cell 12 and the hydrogen generation apparatus 13, there may be devices such as a CO shift converter and CO remover for removing carbon monoxide.

The fuel to be supplied to the desulfurizer 16 is typically a hydrocarbon fuel. Removal of the sulfur compound from the hydrocarbon fuel allows the hydrocarbon fuel to be used for various purposes. The fuel is usually a gas, and may be a liquid. Examples of the fuel include a city gas, natural gas, ethane, propane, and liquefied petroleum gas (LP gas). A trace of an odorant is intentionally mixed in a commercially-available fuel gas such as city gas and LP gas in case of gas leakage. The component of the odorant, which depends on the gas supply company, is typically a sulfur compound such as TBM, DMS, and THT. The concentration of the odorant in the fuel gas is in a range of 1 ppm (parts per million) to 10 ppm at ordinary temperature (5°C to 35°C). Removal of the odorant from the fuel gas can reduce poisoning of the steam reforming catalyst in the reformer 18.

FIG. 2 is a configuration diagram of the desulfurizer 16 used in the fuel cell system 100 shown in FIG. 1. The desulfurizer 16 has a container 20 having an inlet 20a and outlet 20b. The container 20 is filled with a desulfurizing agent 22. The desulfurizing agent 22 is, for example, a powder. In the present embodiment, the desulfurizing agent 22 includes a metal-organic framework (MOF) including metal ions and organic ligands. The desulfurizing agent 22 may consist only of the metal-organic framework or may include other components such as activated carbon. The metal-organic framework may be supported by a support made of a material such as ceramic, glass, carbon, and metal. The metal-organic framework as the desulfurizing agent 22 can be a powder. The metal-organic framework powder desirably has a specific surface area (BET specific surface area) of, for example, 500 $m^2/g$ or more. The upper limit of the specific surface area of the metal-organic framework powder is not particularly limited, and is, for example, 7000 $m^2/g$. The average particle diameter of particles (primary particles) of the metal-organic framework is not particularly limited and is, for example, in the range from 1 $\mu m$ to 100 $\mu m$. The average particle diameter can be calculated, for example, by the procedure described hereinafter. First, the metal-organic framework powder is observed with an electron microscope (SEM or TEM). The average area of any number of the particles (for example, 50 particles) of the metal-organic framework observed in an obtained SEM image or TEM image is calculated using an image processing technique. The diameter of a circle having an area equal to the calculated average area can be considered the average particle diameter of the particles of the metal-organic framework.

In the present embodiment, the metal-organic framework as the desulfurizing agent 22 includes a metal ion and an organic ligand. The metal ion is least one selected from the group consisting of an aluminum ion, an iron ion, and a copper ion. The organic ligand includes isophthalic acid that may have a substituent at a 5-position of its benzene ring. In the X-ray diffraction pattern of the desulfurizing agent 22 measured using Cu-K$\alpha$ rays, a diffraction peak is present in each of the range of 10.9° ± 0.3° and the range of 18.1° ± 0.3°.

Isophthalic acid that may have a substituent at the 5-position of the benzene ring, is represented by the following Formula (1). In Formula (1), R represents a hydrogen atom, an alkyl group having 1 to 2 carbon atoms, an amino group, a hydroxyl group, a methoxy group, or an ethoxy group. These substituents facilitate formation of a desired metal-organic framework.

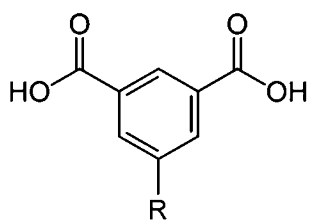
(1)

FIG. 3A is a diagram showing a structure of a metal-organic framework 22a as the desulfurizing agent 22. The structure shown in FIG. 3A was obtained by computer simulation. In this example, the metal ion is a copper ion, and the organic ligand is isophthalic acid (benzene-1,3-dicarboxylic acid). The metal-organic framework 22a includes a paddlewheel structure 30 formed by carboxyl groups of the isophthalic acid coordinating to two copper ions. In other words, the metal-organic framework 22a may be a paddlewheel-type binuclear complex. With this metal-organic framework 22a, a distance L1 between a copper atom and an oxygen atom is short, where the distance L1 corresponds to the distance

between adjacent metal oxide clusters. The distance L1 is approximately 2.7 Å. Since the distance L1 between the copper atom and the oxygen atom is short, a weak Cu-O bond is formed between adjacent metal oxide clusters. The weak Cu-O bond functions as a sacrificial bond. That is, the energy imparted to the metal-organic framework 22a during moisture adsorption to the metal-organic framework 22a is used to break the weak Cu-O bond. This reduces structural collapse of the metal-organic framework 22a, the collapse being caused by the moisture. Additionally, the decrease in adsorption amount caused by the deterioration of the metal-organic framework 22a due to moisture can be reduced. As a result, the amount of the metal-organic framework 22a used as the desulfurizing agent 22 in the desulfurizer 16 can be decreased. This also enables the downsizing of the desulfurizer 16.

FIG. 3B is a diagram showing the structure of HKUST-1 described in Patent Literature 1. HKUST-1 includes a copper ion as a metal ion and trimethylene acid (benzene-1,3,5-tricarboxylic acid) as an organic ligand. A distance L2 between a copper atom and an oxygen atom is approximately 6.7 Å, where the distance L2 corresponds to the distance between adjacent metal oxide clusters. Since the distance L2 is large, no sacrificial bonds are formed between Cu and O. Therefore, compared to the metal-organic framework 22a shown in FIG. 3A, HKUST-1 is more prone to structural collapse when adsorbing moisture.

The metal-organic framework 22a used as a desulfurizing agent 22 preferably includes a copper ion, since the metal-organic framework 22a including a copper ion tends to have high adsorption ability for sulfur compounds. With a metal-organic framework 22a including a copper ion, desulfurization can be performed at atmospheric pressure. Additionally, copper is less expensive than other precious metals such as silver, making it advantageous for reducing material cost. In the present embodiment, the metal-organic framework 22a may include only copper ions as its metal ion.

The metal-organic framework 22a may include only an organic compound represented by Formula (1) as the organic ligand. In this case, it is likely that a metal-organic framework with high crystallinity and high specific surface area can be obtained. Therefore, high sulfur compound adsorption amount can be expected.

The metal-organic framework 22a may include, as organic ligands, a plurality of compounds represented by Formula (1). For example, the metal-organic framework 22a may include, as organic ligands, isophthalic acid and isophthalic acid with a substituent at the 5-position. The organic ligand in the metal-organic framework 22a may be a single compound.

As long as the loss of the sacrificial bonds due to a change in the crystal structure does not occur, the metal-organic framework 22a may include benzene-1,3,5-tricarboxylic acid as an organic ligand in addition to the organic compound represented by Formula (1). For example, when the ratio of the amount of substance of benzene-1,3,5-tricarboxylic acid with respect to the total amount of substance of the organic ligands is 40 mol% or less, it is considered that the crystal structure described with reference to FIG. 3A is maintained. A ratio of the amount of substance of benzene-1,3,5-tricarboxylic acid to the total amount of substance of the organic ligands may be 0 mol% or more and 40 mol% or less.

The metal-organic framework 22a may have an open metal site. A sulfur compound can be easily adsorbed onto the open metal site. An aspect of the open metal site is that a metal ion is coordinatively unsaturated and at least one vacant site is present in the coordination state of the metal ion. In this case, a sulfur compound can interact with the vacant site. In another aspect of open metal site, adsorption activity due to twists or distortions between ligands is exhibited even when metal ions are coordinatively saturated. It is particularly preferable that the metal-organic framework 22a has a coordinatively unsaturated open metal site. The coordinatively unsaturated open metal site exhibits higher activity. Furthermore, in the present embodiment, since the sulfur compound is adsorbed onto the metal-organic framework 22a, it is desirable that the pores on the surface of the metal-organic framework 22a are not blocked or covered by other materials. If the pores on the metal-organic framework 22a are blocked by other materials, adsorption of relatively bulky sulfur compound is inhibited, which may cause a decrease in desulfurization performance.

The metal-organic framework 22a can be synthesized by the solvothermal synthesis (hydrothermal synthesis method). For example, by adding a metal ion source and an organic ligand to a solvent such as dimethylformamide, alcohol, or water, and by slowly heating, crystals of the metal-organic framework 22a precipitate. Examples of metal ion sources include metal nitrates. After the synthesis, it is necessary to remove residual raw materials from the product, so the product is washed using typically the solvent that has been used during the synthesis. After solid-liquid separation and drying, a powdery metal-organic framework 22a is obtained.

[1-2. Operation]

The operation of the fuel cell system 100 configured as described above is explained below.

As shown in FIG. 1 and FIG. 2, a desulfurizing agent 22 is placed inside the container 20 of the desulfurizer 16. The supply source 14 and the desulfurizer 16 are connected by a pipe. A fluid G is supplied to the desulfurizer 16 and brought the desulfurizer 16 into contact with the desulfurizing agent 22. The fluid G is typically a gas. The fluid G may include, for example, a fuel gas, moisture and a sulfur compound as an odorant. The sulfur compound contained in the fluid G is adsorbed to the desulfurizing agent 22, whereby the sulfur compound is removed from the fluid G. Since the metal-organic framework 22a used as the desulfurizing agent 22 is resistant to moisture, use of the metal-organic framework 22a reduces deterioration in desulfurizing ability, where the deterioration is caused by the moisture.

It is not essential that sulfur compound be completely removed from the fluid G. "Removing sulfur compound from fluid G" means reducing the concentration of the sulfur compound in the fluid G.

The moisture content in the fluid G is, for example, in the range of 2,500 vol ppm to 30,000 vol ppm.

The temperature of the fuel gas G is approximately the same as the ambient temperature and is, for example, within the range from -15°C to 60°C. The desulfurizing agent 22 is desirably used at temperature of 100°C or below. The temperature of the desulfurizing agent 22 is approximately the same as the ambient temperature during operation of the fuel cell system 100 and is, for example, within the range from 45°C to 60°C. Keeping the temperature of the desulfurizing agent 22 at 100°C or below can reduce desorption of the adsorbed molecules from the desulfurizing agent 22. The desulfurizing agent 22 is also prevented from structural degradation caused by oxidative decomposition of the organic ligand. In some cases, the container 20 where the desulfurizing agent 22 is placed may be actively cooled in order to keep the temperature of the desulfurizing agent 22 at 100°C or below.

The fluid G pressure at the inlet of the desulfurizer 16 is lower than the fluid G pressure in the supply source 14. The fluid G is supplied from the supply source 14 to the desulfurizer 16 without being pressurized. The fluid G pressure at the inlet of the desulfurizer 16 is, for example, within the range from 2 kPa to 5 kPa. That is, in the present embodiment, desulfurization is carried out at ordinary pressure. According to the present embodiment, therefore, the desulfurizer 16 used can have a simple structure. The configuration of the fuel cell system 100 can also be simplified. Energy required for pressurization can also be saved.

The desulfurized fluid G is supplied to the reformer 18. A hydrogen gas is generated from the hydrocarbon gas contained in the fluid G. The hydrogen gas is supplied to the fuel cell 12.

With the fuel cell system 100 shown in FIG. 1, there is no need to supply hydrogen to the desulfurizer 16. The fluid G may be substantially free of a hydrogen gas, except for a hydrogen gas that is inevitably mixed in. Therefore, the configuration of the fuel cell system 100 of the present embodiment is simpler than that of a conventional fuel cell system employing the hydrodesulfurization process.

[1-3. Effects or the like]

As described above, in the present embodiment, the desulfurizing agent 22 includes at least one metal ion selected from a group consisting of an aluminum ion, an iron ion, and a copper ion, and an organic ligand represented by Formula (1) and coordinating to the metal ion. With such a configuration, a sulfur compound can be removed from a gas including moisture and the sulfur compound.

In addition, in the present embodiment, the substituent of the organic ligand may be an alkyl group having one or two carbon atoms, an amino group, or a hydroxyl group. These substituents facilitate the formation of metal-organic frameworks 22a having the desired structure.

In the present embodiment, the metal ion may include a copper ion. A desulfurizing agent 22 including a copper ion tends to have a high adsorption ability for a sulfur compound.

In the present embodiment, the desulfurizing agent may include a paddlewheel structure formed by the carboxyl groups of the organic ligand, which coordinate to two metal ions. With such a configuration, the sulfur compound can be removed from a gas containing moisture and the sulfur compound.

In the present embodiment, the method for removing the sulfur compound from a fluid including moisture and the sulfur compound includes bringing the fluid into contact with the desulfurizing agent 22 described above. Since the metal-organic framework 22a as the desulfurizing agent 22 in the present embodiment is resistant to moisture, use of the desulfurizing agent 22 reduces the deterioration in desulfurizing ability, where the deterioration is caused by the moisture.

In addition, in the present embodiment, the sulfur compound may include tetrahydrothiophene. With the desulfurizing agent 22 of the present embodiment, tetrahydrothiophene can be efficiently removed from the fluid G.

In the present embodiment, the method for producing a hydrogen-containing gas includes bringing a fuel gas into contact with the above-mentioned desulfurizing agent 22 to remove a sulfur compound from the fuel gas including moisture, the sulfur compound and a hydrocarbon, and generating a hydrogen-containing gas from the fuel gas. Since the metal-organic framework 22a used as the desulfurizing agent 22 in the present embodiment is resistant to moisture, use of the desulfurizing agent 22 reduces the deterioration in desulfurization ability, where the deterioration is caused by the moisture. As a result, a hydrogen-containing gas with a low concentration of the sulfur compound can be produced at low cost.

(Other embodiments)

FIG. 4 is a configuration diagram of a fuel cell system according to Modification 1. A fuel cell system 200 includes a fuel cell 12, a supply source 14, and a desulfurizer 16. The supply source 14 is a hydrogen gas supply source, and in a case

where the hydrogen gas is supplied from the supply source 14 to the fuel cell 12, the reformer 18 described with reference to FIG. 1 is omitted. In some cases, the hydrogen gas supplied from the supply source 14 to the fuel cell 12 may be odorized with a sulfur compound. The sulfur compound is removed from the hydrogen gas, in the desulfurizer 16. In this way, poisoning of the catalyst in the fuel cell 12 can be reduced.

FIG. 5 shows a fuel cell system according to Modification 2. A fuel cell system 102 includes a sulfur-containing gas exhaust passage 26 in addition to the components of the fuel cell system 100 described with reference to FIG. 1. The sulfur-containing gas exhaust passage 26 branches from a passage 17 connected to the outlet (the outlet 20b of the container 20 shown in FIG. 2) of the desulfurizer 16. The passage 17 is a passage connecting the outlet of the desulfurizer 16 and an inlet of the reformer 18. The sulfur compound can be desorbed from the desulfurizing agent 22 and exhausted out of the fuel cell system 102 via the sulfur-containing gas exhaust passage 26.

Specifically, the fuel cell system 102 further includes a carrier gas supply source 21, a heater 19, a passage 27, a three-way valve 24a, and a three-way valve 24b. The three-way valve 24a is placed on a passage 15. The passage 15 is a passage connecting the supply source 14 and the inlet (the inlet 20a of the container 20 shown in FIG. 2) of the desulfurizer 16. The three-way valve 24b is placed on the passage 17. The passage 17 is a passage connecting the outlet (the outlet 20b of the container 20 shown in FIG. 2) of the desulfurizer 16 and the inlet of the reformer 18. The passage 27 is a passage connecting the carrier gas supply source 21 and the passage 15. In the present modification, one end of the passage 27 is connected to the carrier gas supply source 21 and the other end of the passage 27 is connected to the three-way valve 24a. The passage 27 may be directly connected to the desulfurizer 16. The sulfur-containing gas exhaust passage 26 branches from the passage 17. In the present modification, the sulfur-containing gas exhaust passage 26 is connected to the three-way valve 24b. The heater 19 is a heater for heating the desulfurizing agent 22 in the desulfurizer 16. The heater 19 is, for example, a resistive heater. The heater 19 may be placed inside the container 20 of the desulfurizer 16. The carrier gas supply source 21 serves to supply the desulfurizer 16 with a carrier gas for promoting the exhaust of the sulfur compound desorbed from the desulfurizing agent 22. The carrier gas is an inert gas, such as a nitrogen gas or a noble gas. Each passage is formed of at least one pipe.

With the fuel cell 102, the sulfur compound adsorbed onto the desulfurizing agent 22 can be desorbed from the desulfurizing agent 22 to recover the desulfurizing agent 22. Specifically, the three-way valve 24a is operated first to stop the supply of the fuel to the desulfurizer 16 and deliver the carrier gas from the carrier gas supply source 21 to the desulfurizer 16. The three-way valve 24b is operated to deliver the gas exhausted from the desulfurizer 16 to the sulfur-containing gas exhaust passage 26. Next, the heater 19 is turned on to heat the desulfurizer 16. The heating temperature is the interior temperature of the desulfurizer 16 (the temperature of the desulfurizing agent) and is, for example, higher than 100°C, and is typically 150°C. The upper limit of the heating temperature is not particularly limited as long as the desulfurizing agent 22 is not decomposed. The upper limit of the heating temperature is, for example, 200°C. The sulfur compound is desorbed from the desulfurizing agent 22 upon heating the desulfurizer 16. Simultaneously with the heating, an inert gas is supplied from the carrier gas supply source 21 to the desulfurizer 16 to exhaust the sulfur compound desorbed from the desulfurizing agent 22 out of the fuel cell system 102 via the sulfur-containing gas exhaust passage 26. Thus, the desulfurizing agent 22 is recovered and the adsorption ability of the desulfurizing agent 22 is regained, which substantially increases the adsorption amount.

FIG. 6 shows a fuel cell system according to Modification 3. In a fuel cell system 104, the sulfur-containing gas exhaust passage 26 branches from the desulfurizer 16 (the container 20 shown in FIG. 2). The fuel cell system 104 includes on-off valves 25a and 25b in place of the three-way valve 24b shown in FIG. 5. The on-off valve 25a is placed on the passage 17. The on-off valve 25b is placed on the sulfur-containing gas exhaust passage 26. That is, a three-way valve can be replaced by a plurality of on-off valves. Also in the fuel cell system 104 of the present modification, the desulfurizing agent can be recovered in accordance with the previously described procedure.

As described with reference to FIG. 4, the reformer 18 may also be omitted in the fuel cell systems 102 and 104 described with reference to FIG. 5 and FIG. 6.

EXAMPLES

(Example 1)

A metal-organic framework to be used as a desulfurizing agent in Example 1 was synthesized by a solvothermal method. Specifically, 3 mmol of anhydrous copper sulfate, 3 mmol of isophthalic acid, and 120 mL of ethylene glycol were mixed and allowed to react under conditions of 110°C for 24 hours. The product was subjected to suction filtration, washed with methanol, and dried under conditions of 120°C for 24 hours. In this way, a powdery metal-organic framework of Example 1 was obtained.

(Comparative Example 1)

HKUST-1 was synthesized as a desulfurizing agent by the solvothermal method in Comparative Example 1. Specifically, 3.6 mmol of anhydrous copper sulfate, 2 mmol of trimesic acid, and 40 mL of ethylene glycol were mixed and allowed to react under conditions of 120°C for 24 hours. The product was subjected to suction filtration, washed with methanol, and dried under conditions of 120°C for 24 hours. In this way, a powdery metal-organic framework of Comparative Example 1 was obtained.

(X-ray diffraction measurement)

A powder X-ray diffraction measurement was performed for the desulfurizing agents of Example 1 and Comparative Example 1. For the X-ray diffraction measurement, a powder X-ray diffractometer (MiniFlex600 manufactured by Rigaku Corporation) equipped with a Cu-K$\alpha$ radiation source was used.

FIG. 7 shows X-ray diffraction spectra of the desulfurizing agents (metal-organic frameworks) of Example 1 and Comparative Example 1. The desulfurizing agent of Example 1 exhibited diffraction peaks at a diffraction angle 2$\theta$ of 10.9° and at a diffraction angle 2$\theta$ of 18.1°. The desulfurizing agent of Comparative Example 1 exhibited a diffraction peak at an angle 2$\theta$ of 11.6°. As can be understood from these results, the desulfurizing agents of Example 1 and Comparative Example 1 had different crystal structures.

(Measurement of BET specific surface area)

The specific surface areas of the desulfurizing agents of Example 1 and Comparative Example 1 were measured under the following conditions. In a measurement test tube, 0.5 g of the desulfurizing agent was placed, and the test tube was connected to a specific surface area & pore size distribution analyzer (BELSORP MINI manufactured by MicrotracBel Corp.). Subsequently, a nitrogen gas adsorption test was conducted under the following conditions: adsorption temperature of 77 K and maximum relative pressure for adsorption 0.99 (P/P0). Using analysis software Belmaster7, an analysis was performed by the BET method in the linear region of the adsorption isotherm to calculate the specific surface area.

(Measurement of THT adsorption amount)

A vinyl alcohol-based polymer film bag with a capacity of 1000 mL was filled with the desulfurizing agent of Example 1 or Comparative Example 1. The amount of the desulfurizing agent charged was 0.02 g. Air containing tetrahydrothiophene (THT) at a concentration of 1000 vol ppm and a dew point of -50°C was introduced into the bag, and THT was adsorbed onto the desulfurizing agent under conditions of 1 atmosphere, 25°C, and 24 hours. After 24 hours, the THT concentration in the bag was measured using a sulfur chemiluminescence detector (SCD). The THT adsorption amount was calculated from the measured THT concentration. The THT concentration was changed to 800 vol ppm, and the same measurement was performed. The THT adsorption amount was calculated based on the following Formula (2). Based on these results, assuming that THT molecules as a monolayer adsorb to the desulfurizing agent, the Langmuir equation was used to determine the adsorption isotherm, and the adsorption amount at a THT concentration of 15 vol ppm was calculated. The results are shown in Table 1.

$$\text{THT adsorption amount (mass\%)} = 100 \times (M1 - M0)/M0$$

M0: Mass of desulfurizing agent before THT adsorption
M1: Mass of desulfurizing agent after THT adsorption

(Humidification treatment)

The desulfurizing agents of Example 1 and Comparative Example 1 each were placed in a container maintained at 40°C, 100% relative humidity, and 1 atmosphere of atmospheric pressure, and left to stand for 5 hours.

The specific surface area and the THT adsorption amount of the desulfurizing agents from Example 1 and Comparative Example 1 after humidification treatment were measured using the method described earlier. The results are shown in Table 1.

[Table 1]

| | Initial value of specific surface area ($m^2/g$) | Specific surface area after humidification treatment ($m^2/g$) | Initial value of THT adsorption amount (mass%) | THT adsorption amount after humidification treatment (mass%) |
|---|---|---|---|---|
| Example 1 | 710 | 692 | 3.8 | 3.6 |
| Comparative Example 1 | 1487 | 452 | 6.2 | 1.9 |

As shown in Table 1, the initial value of specific surface area of the desulfurizing agent (HKUST-1) in Comparative Example 1 was high. The initial value of THT adsorption amount of the desulfurizing agent in Comparative Example 1 was also large. However, after the humidification treatment, the specific surface area and the THT adsorption amount of the desulfurizing agent in Comparative Example 1 decreased significantly. In other words, it is considered that the desulfurizing agent of Comparative Example 1 underwent significant structural collapse due to moisture. As a result, it is considered that the specific surface area and the THT adsorption amount decreased significantly.

The initial values of the specific surface area and the THT adsorption amount of the desulfurizing agent of Example 1 were lower than the initial values for counterparts of the desulfurizing agent of Comparative Example 1. However, the specific surface area and the THT adsorption amount of the desulfurizing agent of Example 1 remained almost unchanged before and after the humidification treatment. It is considered that the desulfurizing agent of Example 1 did not undergo structural collapse, where the collapse is caused by the moisture. As a result, it is considered that the specific surface area and the THT adsorption amount remained almost unchanged before and after the humidification treatment.

INDUSTRIAL APPLICABILITY

According to the technique disclosed in the present Description, a sulfur compound can be removed effectively from a fluid including moisture and the sulfur compound over a long period of time. The technique disclosed in the present Description is applicable to desulfurizers, hydrogen generation apparatuses, fuel cell systems, deodorizers, or the like.

**Claims**

**1.** A desulfurizing agent for removing a sulfur compound from a fluid comprising moisture and the sulfur compound, the desulfurizing agent comprising:

at least one kind of metal ions selected from the group consisting of an aluminum ion, an iron ion, and a copper ion; and
an organic ligand coordinating to the metal ion, wherein
the organic ligand comprises isophthalic acid having optionally a substituent at a 5-position of a benzene ring, and
in an X-ray diffraction pattern of the desulfurizing agent measured using Cu-K$\alpha$ radiation, a diffraction peak is present in each of a diffraction angle range of 10.9° ± 0.3° and a diffraction angle range of 18.1° ± 0.3°.

**2.** The desulfurizing agent according to claim 1, wherein
the substituent is an alkyl group having 1 or 2 carbon atoms, an amino group, a hydroxyl group, a methoxy group, or an ethoxy group.

**3.** The desulfurizing agent according to claim 1, wherein
the metal ion comprises the copper ion.

**4.** The desulfurizing agent according to claim 1, comprising a paddlewheel structure formed by coordination of carboxyl groups of the organic ligand to two of the metal ions.

**5.** A method for removing a sulfur compound from a fluid comprising moisture and the sulfur compound,
the method comprising bringing the fluid into contact with the desulfurizing agent according to claim 1.

**6.** The method described in claim 5, wherein
the sulfur compound comprises tetrahydrothiophene.

**7.** A method for producing a hydrogen-containing gas, the method comprising:

bringing a fuel gas into contact with the desulfurizing agent according to claim 1 to remove a sulfur compound from the fuel gas, where the fuel gas comprises moisture, the sulfur compound, and a hydrocarbon; and
generating a hydrogen-containing gas from the fuel gas.

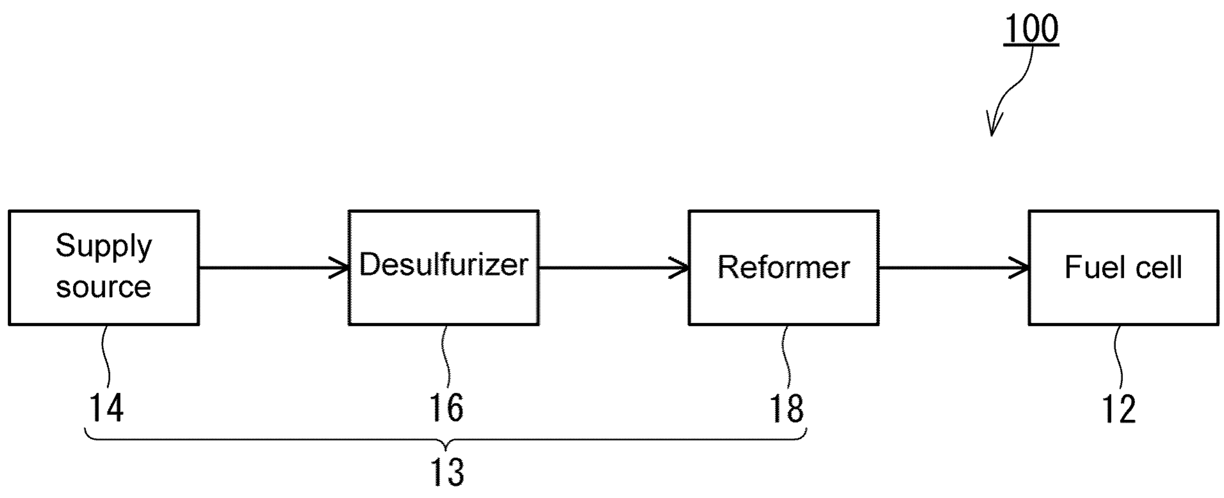
100
Supply source
Desulfurizer
Reformer
Fuel cell
14
16
18
12
13

FIG.1

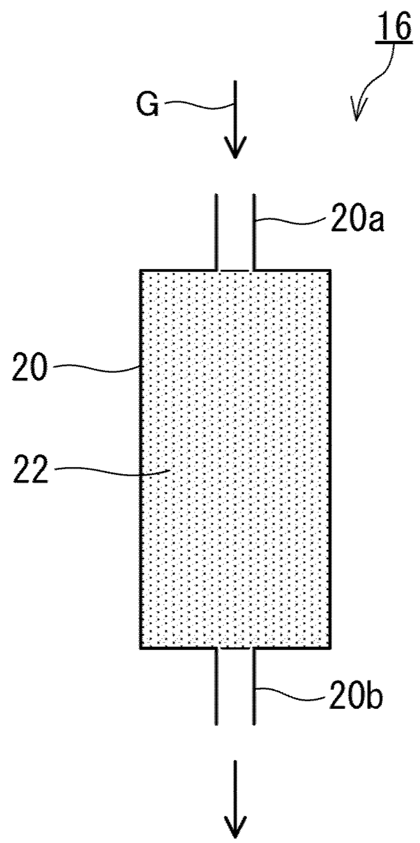
16
G
20a
20
22
20b

FIG.2

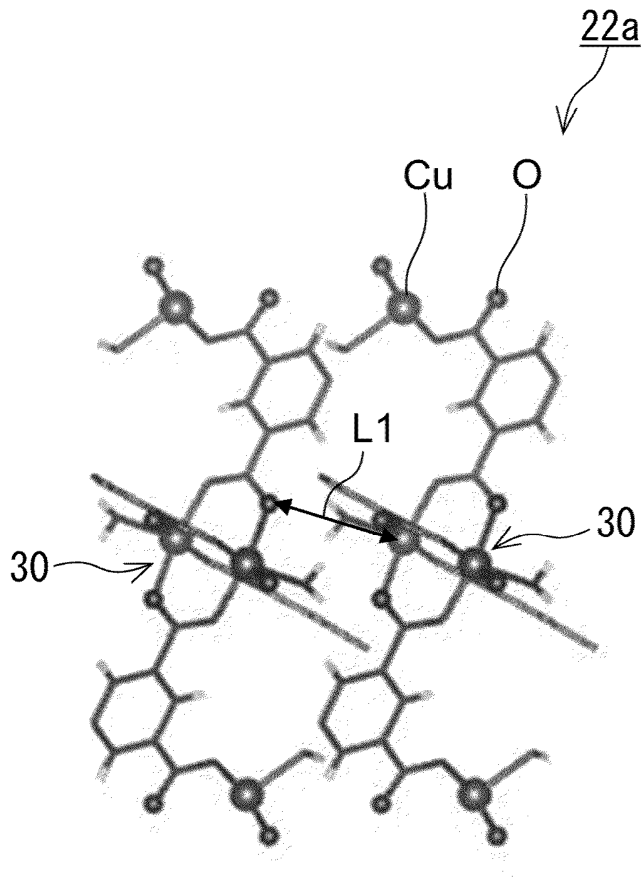


FIG.3A

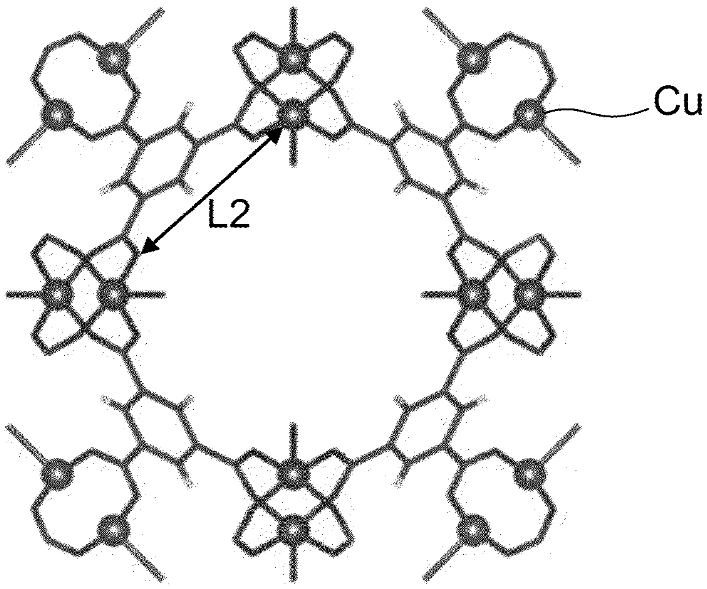


FIG.3B

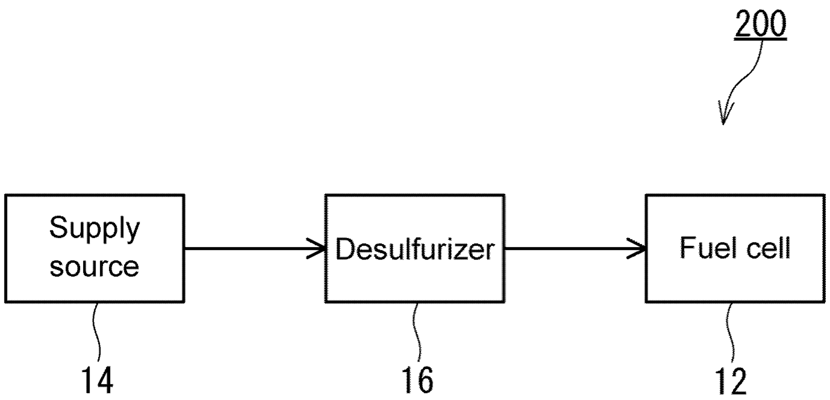


FIG.4

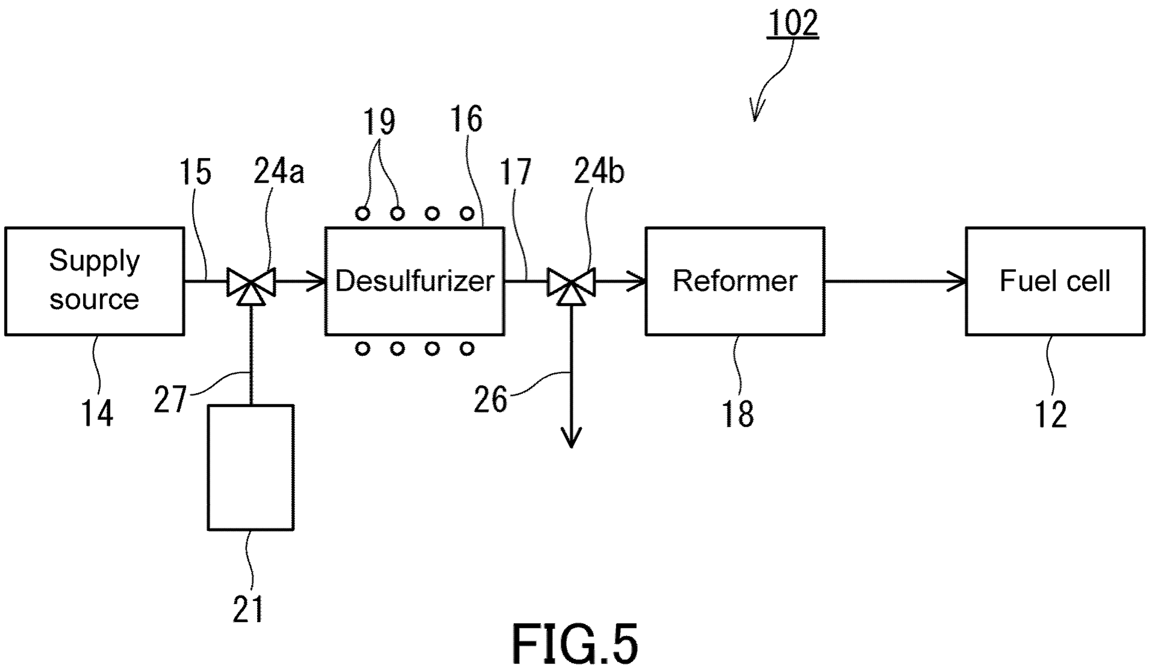


FIG.5

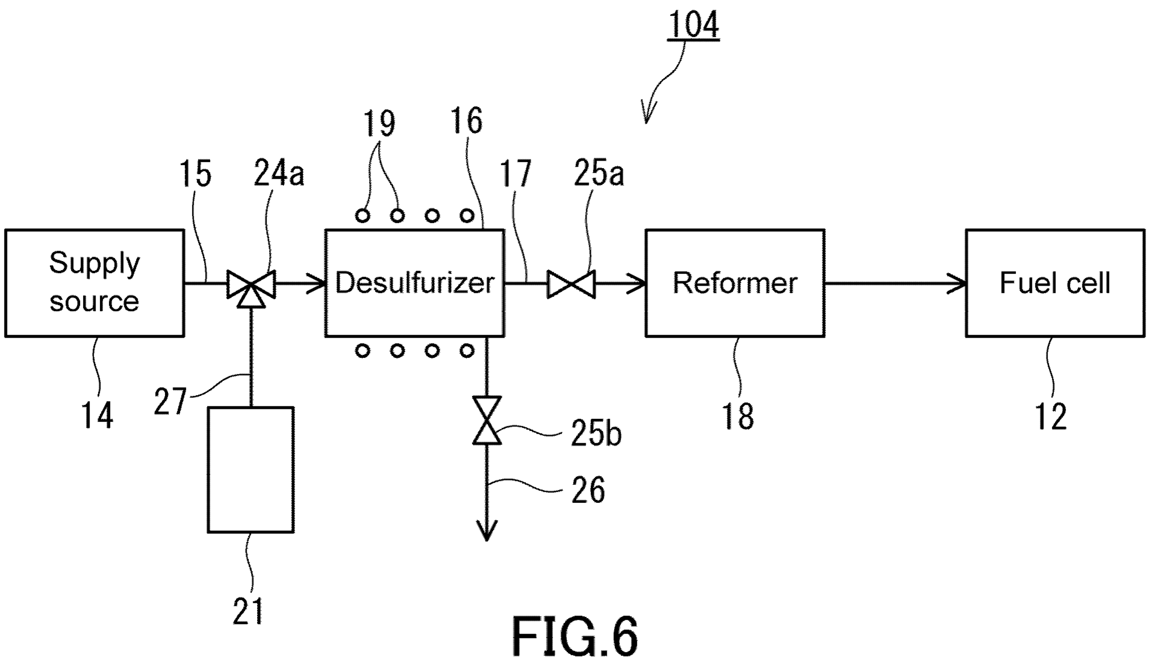


FIG.6

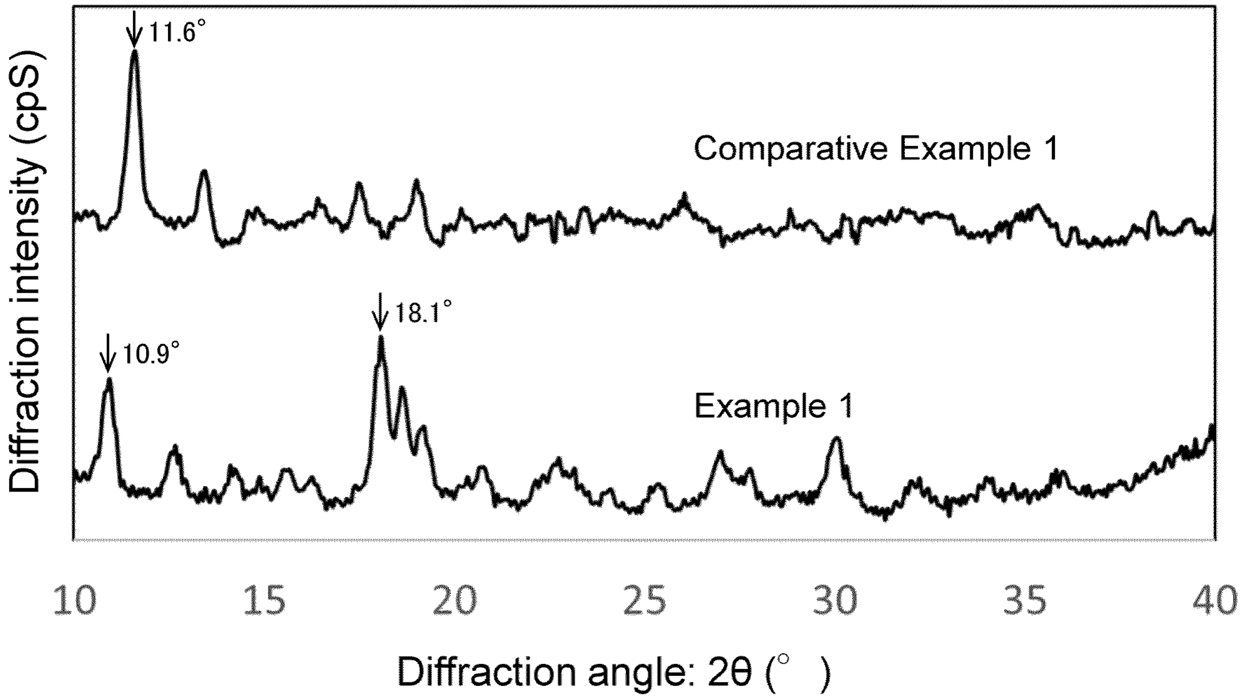
11.6°
Comparative Example 1
18.1°
10.9°
Example 1
Diffraction intensity (cpS)
10
15
20
25
30
35
40
Diffraction angle: 2θ (°)

FIG.7

## INTERNATIONAL SEARCH REPORT

International application No.
**PCT/JP2024/005808**

### A. CLASSIFICATION OF SUBJECT MATTER

***B01J 20/22***(2006.01)i; ***B01D 53/04***(2006.01)i; ***C01B 3/38***(2006.01)i; ***H01M 8/04***(2016.01)i; ***H01M 8/0612***(2016.01)i
FI: B01J20/22 A; B01D53/04; H01M8/04 N; H01M8/0612; C01B3/38

According to International Patent Classification (IPC) or to both national classification and IPC

### B. FIELDS SEARCHED

Minimum documentation searched (classification system followed by classification symbols)

B01J20/22; B01D53/04; C01B3/38; H01M8/04; H01M8/0612

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-181452 A (PANASONIC INTELLECTUAL PROPERTY MANAGEMENT CO., LTD.) 24 October 2019 (2019-10-24) paragraphs [0015]-[0090], fig. 6 | 1-7 |
| A | WO 2017/150019 A1 (PANASONIC CORPORATION) 08 September 2017 (2017-09-08) | 1-7 |
| A | JP 2008-540110 A (BASF SE) 20 November 2008 (2008-11-20) | 1-7 |
| A | JP 2014-100655 A (TOYOBO CO., LTD.) 05 June 2014 (2014-06-05) | 1-7 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/005808**

| Patent document cited in search report | Publication date (day/month/year) | Patent family member(s) | Publication date (day/month/year) |
|---|---|---|---|
| JP 2019-181452 A | 24 October 2019 | US 2019/0300548 A1<br>paragraphs [0037]-[0139], fig. 6<br>EP 3553024 A2<br>CN 110316702 A | |
| WO 2017/150019 A1 | 08 September 2017 | EP 3424583 A1<br>JP 6238150 B1 | |
| JP 2008-540110 A | 20 November 2008 | US 2008/0190289 A1<br>WO 2006/122920 A1<br>DE 102005022844 A1<br>KR 10-2008-0020619 A<br>CN 101175548 A | |
| JP 2014-100655 A | 05 June 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6238150 B